# FASCICULE DE BREVET EUROPEEN

(11) **EP 4 581 286 B1**
(45) Date de publication et mention de la délivrance du brevet: **14.10.2026**
(21) Numéro de dépôt: 23739321.0
(22) Date de dépôt: 19.06.2023
(51) Int. Cl.: F16H 61/04, F16H 61/682, F16H 63/50, B60W 30/19, F02D 41/02

(54) **PROCÉDÉ DE LIMITATION DE COUPLE MOTEUR LORS D'UN CHANGEMENT DE RAPPORT DE VITESSE**
VERFAHREN ZUR BEGRENZUNG DES MOTORDREHMOMENTS WÄHREND EINES GANGWECHSELS
METHOD FOR LIMITING ENGINE TORQUE DURING GEAR-SHIFTS

(30) Priorité: 29.08.2022 FR 2208612
(43) Date de publication de la demande: 09.07.2025
(73) Titulaire: Stellantis Auto SAS, 78300 Poissy (FR)
(72) Inventeur: BILLER, David, 90400 MOVAL (FR); ROYER, Claude, 78500 SARTROUVILLE (FR); EL HAILA, Rajae, 25100 BOSKOURA (MA); LAUNAY, Cedric, 78680 EPONE (FR); MILHAU, Yohan, 78630 ORGEVAL (FR)
(74) Mandataire: PSIP
(86) Numéro de dépôt international: PCT/FR2023/050893
(87) Numéro de publication internationale: WO 2024/047288

(56) Documents cités:
- EP-A1- 2 980 386
- EP-A1- 3 287 672

## Description

La présente invention porte sur un procédé de limitation de couple moteur lors d'un changement de rapport de vitesse. L'invention trouve une application particulièrement avantageuse avec les véhicules automobiles munis d'un moteur à combustion interne et d'une boîte de vitesses manuelle.

Dans un véhicule automobile, la boîte de vitesses permet de transmettre la puissance générée par le moteur aux roues motrices du véhicule en démultipliant plus ou moins la vitesse de rotation d'un volant d'inertie du moteur lié mécaniquement au vilebrequin.

Dans le cas d'un véhicule à boîte de vitesses manuelle, la boîte de vitesses est reliée d'une part au volant d'inertie, via un premier arbre d'entrainement (appelé "arbre primaire") et un dispositif d'embrayage relié au volant d'inertie par un disque d'embrayage, et d'autre part aux roues motrices du véhicule, via un deuxième arbre d'entrainement (appelé "arbre secondaire") et un système de transmission. Le premier arbre primaire et le deuxième arbre secondaire sont reliés entre eux par une pluralité de pignons d'engrenage définissant une pluralité de rapports de vitesse permettant de démultiplier le couple transmis par l'arbre primaire à l'arbre secondaire.

Lors d'un changement de rapport de vitesse par le conducteur, ce dernier relâche tout d'abord la pédale d'accélération et enfonce la pédale d'embrayage, ce qui a pour effet de désaccoupler le volant d'inertie du moteur et l'arbre primaire de la boîte de vitesses en écartant le disque d'embrayage du volant d'inertie. Le conducteur change alors de rapport de vitesse à l'aide du levier de vitesse puis relâche la pédale d'embrayage tout en enfonçant de nouveau la pédale d'accélération.

Lorsque la pédale d'embrayage est relâchée, le disque d'embrayage entre à nouveau en contact avec le volant d'inertie dans une phase dite de "glissement", pendant laquelle le disque glisse sur le volant d'inertie, jusqu'à atteindre une position d'engagement (dite "de collage") dans laquelle le disque d'embrayage est solidaire du volant d'inertie en rotation. En d'autres termes, le couple de l'arbre primaire de la boîte de vitesses est égal au couple transmis par l'embrayage durant toute la phase de glissement puis égal au couple transmis par le moteur à l'embrayage lorsque la position d'engagement a été atteinte et que le dispositif d'embrayage est à l'état fermé.

Dans certaines situations de vie, la consigne de couple pendant le changement de rapport est élevée du fait par exemple d'un appui trop important sur la pédale d'accélération du conducteur. Ceci engendre à une envolée de régime moteur lors du changement de rapport, provoquant des à-coups, des désagréments acoustiques, ainsi qu'une augmentation de la consommation et de la pollution du moteur thermique. En outre, cela détériore l'embrayage du fait d'une dissipation importante d'énergie lors de la friction entre le disque d'embrayage et le volant d'inertie.

En outre, l'état de la technique est connu du document EP2980386A1.

L'invention vise à remédier efficacement aux inconvénients précités en proposant un procédé de contrôle d'un moteur de véhicule automobile à boîte de vitesses manuelle, ledit moteur comprenant un volant d'inertie relié à un arbre primaire de la boîte de vitesses via un dispositif d'embrayage, ledit dispositif d'embrayage comprenant un disque d'embrayage, ledit procédé comprenant :
- une étape de placement, par enfoncement d'une pédale d'embrayage, du disque d'embrayage dans une position de retrait par rapport au volant d'inertie,
- une étape de désengagement d'un rapport de vitesse initial,
- une étape de passage d'un rapport de vitesse cible correspondant à un rapport de vitesse montant,
- une étape de déplacement du disque d'embrayage vers une position d'engagement de manière à entrer dans une phase de glissement par relâchement progressif de la pédale d'embrayage, et
- une étape de contrôle du couple du volant d'inertie préalablement à l'engagement du volant d'inertie avec le disque d'embrayage,
- l'étape de contrôle du couple du volant d'inertie comprenant une étape de mise en œuvre d'une fonction de limitation de couple consistant à réduire un couple du volant d'inertie par rapport à un couple du volant d'inertie demandé par le conducteur,
caractérisé en ce que dans le cas où un enfoncement d'une pédale d'accélération est supérieur à un seuil, la fonction de limitation de couple est inhibée.

L'invention permet ainsi d'améliorer l'agrément de conduite lors d'un changement de rapport de vitesse en réduisant les à-coups subis en fin de phase de ré-embrayage qui sont une source de torsions de la chaine de traction. L'invention permet également d'améliorer le confort acoustique durant le changement de rapport tout en réduisant la consommation ainsi que les émissions particules polluantes. L'invention permet en outre de maximiser la durée de vie de l'embrayage en maîtrisant l'énergie dissipée lors d'un changement de rapport de vitesse.

Selon une mise en œuvre de l'invention, le couple du volant d'inertie demandé par le conducteur est coordonné avec des fonctions d'aide à la conduite.

Selon une mise en œuvre de l'invention, des conditions d'activation de la fonction de limitation de couple sont choisies parmi les suivantes :
i- un écart entre un régime réel du volant d'inertie et un régime cible du volant d'inertie correspondant au rapport de vitesse cible est inférieur à un seuil,
ii- des conditions d'ouverture du dispositif d'embrayage sont remplies,
iii- le rapport de vitesse cible fait partie d'une cartographie permettant de choisir des rapports pour lesquels la fonction de limitation de couple est fonctionnelle,
iv- une vitesse du véhicule automobile est supérieure à un seuil prédéterminé et des autorisations d'activation sont fournies par des fonctions d'aide à la conduite et des fonctions de sûreté de fonctionnement et des fonctions de gestion du couple thermique,
v- un capteur de position de neutre d'un levier de vitesse indique que le levier de vitesse est au neutre,
vi- un rapport de vitesse en cours est nul,
vii- un enfoncement de la pédale d'embrayage est compris entre un premier seuil et un deuxième seuil,
viii- un gradient de relevé de pédale d'embrayage est supérieur à un seuil de gradient,
ix- un régime du moteur thermique est situé dans une plage de régime prédéterminée.

Selon une mise en œuvre de l'invention, des conditions d'activations supplémentaires suivantes sont également prises en compte :
- un niveau de couple transmissible par le dispositif d'embrayage est compris entre un premier seuil de couple transmissible et un deuxième seuil de couple transmissible,
- une position du disque d'embrayage est comprise entre un premier seuil de position et un deuxième seuil de position,
- une température du dispositif d'embrayage est comprise entre un premier seuil de température et un deuxième seuil de température.

Selon une mise en œuvre de l'invention, les seuils dépendent d'au moins un paramètre choisi parmi : une température du dispositif d'embrayage, une vitesse du véhicule automobile, le rapport de vitesse cible, un état d'activation de fonctions d'aide à la conduite.

Selon une mise en œuvre de l'invention, la fonction de limitation de couple est désactivée lorsqu'au moins une condition de désactivation ci-dessous est remplie :
- la fonction de limitation de couple a été mise en œuvre pendant une durée prédéterminée,
- un instant où une génération de couple doit opérer est détecté.
- la condition d'activation iii est désactivée sur une hystérésis,
- la condition d'activation iv est désactivée sur une hystérésis,
- un couple du dispositif d'embrayage est situé dans une plage de valeurs prédéterminée.

Selon une mise en œuvre de l'invention, la durée prédéterminée est calibrable en fonction d'une vitesse du véhicule automobile et du rapport de vitesse cible.

L'invention sera mieux comprise à la lecture de la description qui suit et à l'examen des figures qui l'accompagnent. Ces figures ne sont données qu'à titre illustratif mais nullement limitatif de l'invention.

[Fig. 1] La figure 1 est une représentation schématique d'un véhicule automobile mettant en œuvre le procédé selon l'invention de limitation de couple ;

[Fig. 2] La figure 2 est un diagramme des étapes du procédé selon l'invention de limitation de couple lors d'un changement de rapport de vitesse montant ;

[Fig. 3] La figure 3 est un graphique représentant l'évolution temporelle d'un enfoncement de la pédale d'embrayage, d'un enfoncement de la pédale d'accélération ; d'un couple du volant d'inertie correspondant à une volonté du conducteur, d'un couple réel du volant d'inertie, d'un régime réel du volant d'inertie et d'un régime cible du volant d'inertie ; ainsi que l'état d'activation de la fonction de limitation de couple lors d'un changement de rapport de vitesse montant ;

[Fig. 4] La figure 4 est un diagramme représentant la priorisation des différentes fonctions permettant de déterminer le couple final appliqué au volant d'inertie du moteur thermique.

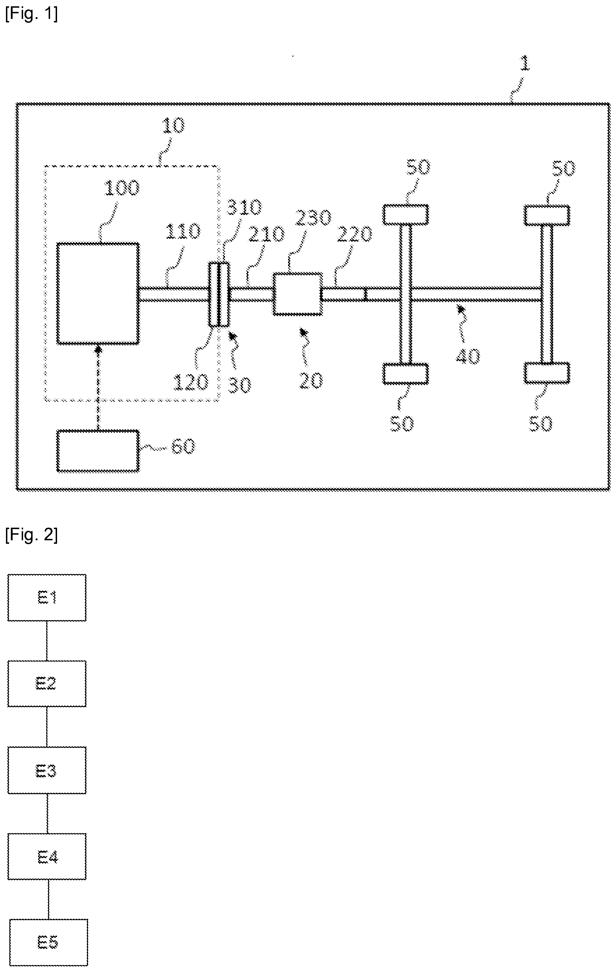

La figure 1 montre un véhicule 1 à moteur 10 thermique et à boîte de vitesses 20 manuelle. Le véhicule 1 comprend également un dispositif d'embrayage 30, un système de transmission 40, une pluralité de roues 50 et un calculateur 60 de contrôle du moteur 10.

Le moteur 10 comprend un bloc moteur 100 comportant une pluralité de cylindres dans chacun desquels est brulé un mélange de carburant et d'air afin d'entrainer en rotation un vilebrequin 110 qui est monté de manière solidaire avec un volant d'inertie 120.

La boîte de vitesses 20 comprend un arbre primaire 210 et un arbre secondaire 220 reliés entre eux par une pluralité de pignons d'engrenage 230 permettant de démultiplier le couple transmis par l'arbre primaire 210 à l'arbre secondaire 220. La sélection du pignon, appelée rapport de vitesse, est réalisée par le conducteur (non représenté) du véhicule 1 à l'aide d'un levier de vitesse (non représenté).

Le dispositif d'embrayage 30 comprend un disque d'embrayage 310, monté de manière solidaire avec l'arbre primaire 210 de la boîte de vitesses 20. Un déplacement du disque d'embrayage est commandé par une pédale d'embrayage actionnable par le conducteur du véhicule 1. Le disque d'embrayage 310 est apte à être déplacé entre une position de d'engagement du disque d'embrayage 310 avec le volant d'inertie 120, lorsque le conducteur n'appuie pas ou appuie peu sur la pédale d'embrayage (le dispositif d'embrayage 30 est alors à l'état fermé), et une position de retrait dans laquelle le volant d'inertie 120 n'est plus en contact avec le disque d'embrayage 310, lorsque le conducteur appuie suffisamment sur la pédale d'embrayage (le dispositif d'embrayage 30 est alors à l'état ouvert).

Lorsque le dispositif d'embrayage 30 est engagé avec le volant d'inertie 120 (i.e. lorsque le disque d'embrayage 310 est en position d'engagement), le couple généré par le moteur 10 est transmis à l'arbre primaire 210 via le vilebrequin 110 et le disque d'embrayage 310 puis démultiplier via les pignons d'engrenage 230 jusqu'à l'arbre secondaire 220 qui le transmet aux roues 50 via le système de transmission 40.

Lorsque le disque d'embrayage 310 se déplace d'une position de retrait vers la position d'engagement et entre en contact avec le volant d'inertie 120, le disque d'embrayage 310 glisse tout d'abord sur le volant d'inertie 120, dans une phase dite "de glissement", avant d'atteindre la position d'engagement. Ce cas de figure se produit notamment lorsque le conducteur relâche la pédale d'embrayage après un changement de rapport de vitesse.

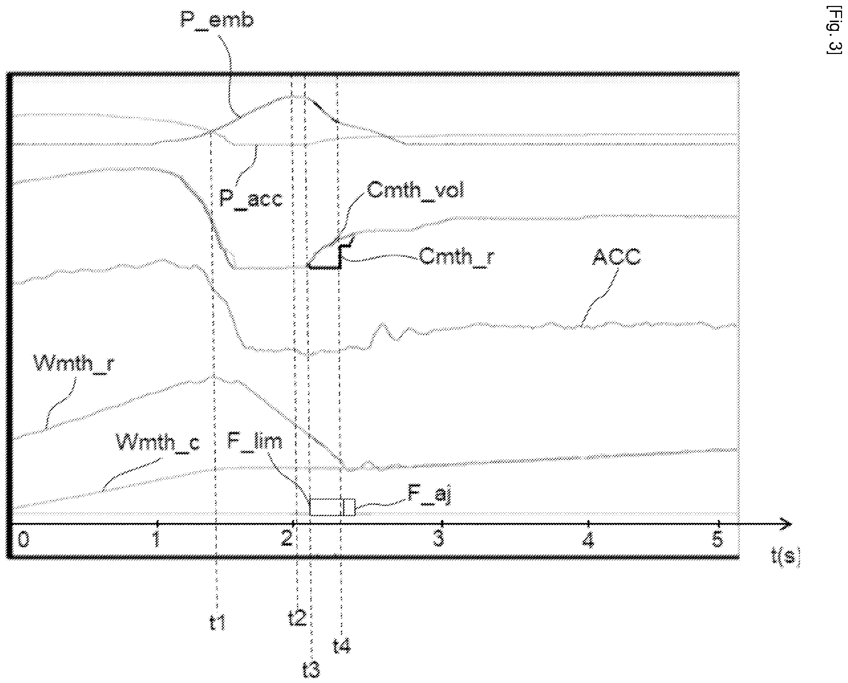

Le calculateur 60 permet de contrôler le moteur 10, notamment les injections de carburant dans les cylindres du moteur 10. Le calculateur 60 est également apte à contrôler le couple du volant d'inertie 120 du moteur 10 lors d'un changement de rapport de vitesse pour assurer la mise en œuvre du procédé de limitation de couple selon l'invention décrit ci-après en référence avec les figures 2 et 3.

Sur la figure 3, la courbe P_emb représente l'évolution temporelle d'un enfoncement de la pédale d'embrayage. La courbe P_acc représente l'évolution temporelle d'un enfoncement de la pédale d'accélération.

La courbe Cmth_vol représente l'évolution temporelle de la courbe d'un couple du volant d'inertie 120 demandé par le conducteur. Le couple demandé par le conducteur Cmth_vol correspond à une volonté d'accélération de la part du conducteur déterminée à partir de l'enfoncement de la pédale d'accélération.

La courbe Cmth_r représente l'évolution temporelle d'un couple réel du volant d'inertie 120.

La courbe Wmth_r représente l'évolution temporelle d'un régime réel du volant d'inertie 120. La courbe Wmth_c représente l'évolution temporelle d'un régime cible du volant d'inertie 120. Le régime cible Wmth_c est obtenu à partir du rapport de vitesse cible déterminé au moyen d'un capteur de grille de la boîte de vitesse 20 ou estimé au moyen d'une fonction dédiée. Connaissant le rapport de démultiplication du rapport de vitesse cible ainsi que le régime du moteur thermique 10, le régime cible peut ainsi être déterminé aisément par le calculateur 60.

La courbe F_lim représente l'état d'activation de la fonction de limitation de couple lors d'un changement de rapport de vitesse montant. La courbe F_aj représente l'état d'activation de la fonction d'ajout de couple lors d'un changement de rapport de vitesse montant. La courbe ACC correspond à la courbe retournée par un accéléromètre embarqué dans le véhicule 1.

Tout d'abord, dans une étape E1, lorsque le conducteur souhaite réaliser un passage de rapport de vitesse, il enfonce à l'instant t1, la pédale d'embrayage, ce qui a pour effet de placer le disque d'embrayage 310 dans une position de retrait par rapport au volant d'inertie 120.

Le conducteur désengage manuellement, dans une étape E2, un rapport de vitesse initial à l'aide du levier de vitesse puis passe dans une étape E3 un rapport de vitesse cible correspondant à un rapport de vitesse montant, c'est-à-dire un rapport de vitesse supérieur au rapport de vitesse initial. Ainsi, dans le cadre du passage d'un rapport de vitesse montant, si le rapport de vitesse initial est le rapport N, le rapport de vitesse cible est le rapport N+1 (N étant un nombre entier).

Le conducteur relâche à partir de l'instant t2 progressivement la pédale d'embrayage dans le but de ré-embrayer le disque d'embrayage 310 avec le volant d'inertie 120. Ce faisant, le disque d'embrayage 310 se déplace tout d'abord vers la position d'engagement dans une étape E4 de manière à entrer dans une phase de glissement du disque d'embrayage 310 sur le volant d'inertie 120.

Le calculateur 60 assure le contrôle E5 du couple du volant d'inertie 120 préalablement à l'engagement du volant d'inertie 120 avec le disque d'embrayage 310. Lorsque des conditions d'activations détaillées ci-après sont remplies, le calculateur 60 met en œuvre la fonction de limitation de couple consistant à réduire le couple du volant d'inertie 120 par rapport au couple demandé par le conducteur Cmth_vol.

Le couple du volant d'inertie 120 demandé par le conducteur Cmth_vol pourra être coordonné avec des fonctions d'aide à la conduite, telles qu'un limiteur de vitesse, un régulateur de vitesse, un régulateur adaptatif, ou tout autre fonction d'aide à la conduite qu'un véhicule automobile pourra intégrer.

Ainsi, à l'instant t3, le conducteur accélère tôt alors que le dispositif d'embrayage 30 est encore ouvert (l'enfoncement de la pédale d'embrayage vaut environ 65% sachant que 100% correspond à un enfoncement complet, c'est-à-dire jusqu'à la butée de fin de course). Cela a pour effet d'activer la fonction de limitation de couple F_lim. On observe alors que le couple Cmth_r réel du volant d'inertie 120 est inférieur au couple Cmth_vol souhaité par le conducteur.

En effet, la fonction F_lim de limitation de couple activée entre les instants t3 et t4 limite le couple du volant d'inertie 120 pour éviter un pic de régime qui aurait pour conséquence d'augmenter le couple inertiel à la fermeture du dispositif d'embrayage 30.

A l'instant t4, la fonction F_lim est désactivée car au moins une condition de désactivation est remplie.

Entre t4 et t5, le calculateur 60 met en œuvre une fonction d'ajout de couple F_aj.

Ainsi, les fonctions F_lim et F_aj sont des fonctions d'assistance de couple mises en œuvre lors d'un changement de rapport de vitesse montant.

Suivant une mise en œuvre avantageuse du procédé, les conditions d'activation de la fonction de limitation de couple F_lim sont choisies parmi les suivantes :
i- un écart entre un régime réel Wmth_r du volant d'inertie 120 et un régime cible Wmth_c du volant d'inertie 120 correspondant au rapport de vitesse cible est inférieur à un seuil,
ii- des conditions d'ouverture du dispositif d'embrayage 30 sont remplies,
iii- le rapport de vitesse cible fait partie d'une cartographie permettant de choisir des rapports pour lesquels la fonction de limitation de couple est fonctionnelle,
iv- une vitesse du véhicule automobile est supérieure à un seuil prédéterminé et des autorisations d'activation sont fournies par des fonctions d'aide à la conduite et des fonctions de Sûreté de fonctionnement et des fonctions de gestion du couple thermique,
v- un capteur de position de neutre d'un levier de vitesse indique que le levier de vitesse est au neutre,
vi- le rapport de vitesse en cours est nul,
vii- un enfoncement de la pédale d'embrayage est compris entre un premier seuil et un deuxième seuil,
viii- un gradient de relevé de pédale d'embrayage est supérieur à un seuil de gradient,
ix- le régime du moteur thermique 10 est situé dans une plage de régime prédéterminée.

De préférence, toutes les conditions d'activation ci-dessus doivent être remplies pour activer la fonction de limitation de couple F_lim.

Des conditions d'activations supplémentaires suivantes pourront également être prises en compte :
- un niveau de couple transmissible par le dispositif d'embrayage 30 est compris entre un premier seuil de couple transmissible et un deuxième seuil de couple transmissible,
- une position du disque d'embrayage 310 est comprise entre un premier seuil de position et un deuxième seuil de position,
- une température du dispositif d'embrayage 310 est comprise entre un premier seuil de température et un deuxième seuil de température.

Les seuils précités associés aux conditions d'activation de la fonction de limitation de couple F_lim pourront dépendre d'au moins un paramètre choisi parmi: une température du dispositif d'embrayage 30, une vitesse du véhicule automobile, le rapport de vitesse cible, un état d'activation de fonctions d'aide à la conduite.

La fonction de limitation de couple F_lim est désactivée lorsqu'au moins une condition de désactivation ci-dessous est remplie :
- la fonction de limitation de couple F_lim a été mise en œuvre pendant une durée prédéterminée,
- un instant où une génération de couple doit opérer est détecté lorsqu'un régime prédit calculé (grâce au gradient de régime réel Wmth_r) devient inférieur au régime de l'arbre primaire cible Wmth_c.
- la condition d'activation iii est désactivée sur une hystérésis,
- la condition d'activation iv est désactivée sur une hystérésis,
- un couple du dispositif d'embrayage 30 est situé dans une plage de valeurs prédéterminée.

La durée prédéterminée pourra être calibrable en fonction d'une vitesse du véhicule automobile et du rapport de vitesse cible.

Il est à noter que dans le cas où un enfoncement d'une pédale d'accélération est supérieur à un seuil, la fonction de limitation de couple F_lim est inhibée. En effet, un tel cas de figure indique que le conducteur a impérativement besoin de couple pour gérer une situation de conduite le nécessitant comme par exemple une phase de dépassement sur autoroute.

La fonction de limitation de couple F_lim et la fonction d'ajout de couple F_aj sont mises en œuvre exclusivement l'une de l'autre, c'est-à-dire que la fonction de limitation de couple F_lim est mise en œuvre uniquement si la fonction d'ajout de couple F_aj est inactive et inversement la fonction d'ajout de couple est mise en œuvre uniquement si la fonction de limitation de couple est inactive.

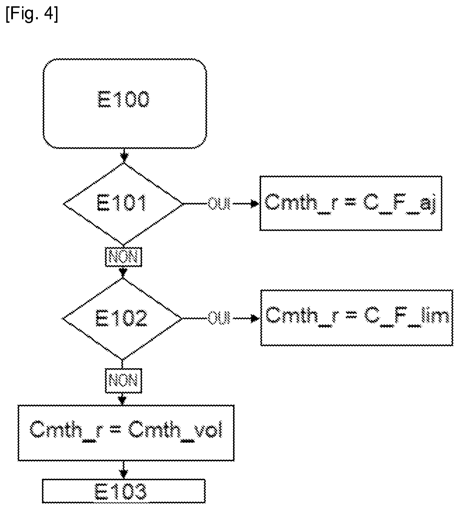

Comme cela est illustré par la figure 4, au cours d'une étape de prétraitement E100, le calculateur 60 reçoit des données d'entrée relative à l'état de la chaîne de traction, telles que le régime du volant d'inertie 120, le rapport de vitesse cible, l'enfoncement de la pédale d'embrayage, le couple transmissible par le dispositif d'embrayage 30, le signal du capteur de position de neutre du levier de vitesse, etc...

Au cours d'une étape E101, le calculateur 60 vérifie si les conditions d'activations sont remplies pour que la fonction d'ajout de couple F_aj soit activée. Si cela est le cas, le couple réel du volant d'inertie 120 Cmth_r est égal au couple C_F_aj retourné par la fonction d'ajout de couple F_aj.

Si les conditions d'activation de la fonction d'ajout de couple F_aj ne sont pas remplies, le calculateur 60 vérifie, au cours d'une étape E102, si les conditions d'activations précitées sont remplies pour que la fonction de limitation de couple F_lim soit activée. Si cela est le cas, le couple réel du volant d'inertie 120 Cmth_r est égal au couple C_F_lim retourné par la fonction de limitation de couple F_lim. Ce couple C_F_lim est déterminé au moyen d'une cartographie qui dépend du couple correspondant à une volonté d'accélération de la part du conducteur.

Sinon, le couple Cmth_r réel du volant d'inertie 120 est égal au couple correspondant à une volonté d'accélération de la part du conducteur. Ce couple est déterminé à partir d'un niveau d'enfoncement de la pédale d'accélération.

Au cours d'une étape 103, le calculateur 60 moteur effectue une synthèse de la situation de vie en cours de la chaîne de traction et contrôle le couple du volant d'inertie 120 à partir du couple adapté.

## Revendications

1. Procédé de contrôle d'un moteur (10) de véhicule (1) automobile à boîte de vitesses (20) manuelle, ledit moteur (10) comprenant un volant d'inertie (120) relié à un arbre primaire (210) de la boîte de vitesses (20) via un dispositif d'embrayage (30), ledit dispositif d'embrayage (30) comprenant un disque d'embrayage (310), ledit procédé comprenant :
- une étape de placement (E1), par enfoncement d'une pédale d'embrayage, du disque d'embrayage (310) dans une position de retrait par rapport au volant d'inertie (120),
- une étape (E2) de désengagement d'un rapport de vitesse initial,
- une étape de passage (E3) d'un rapport de vitesse cible correspondant à un rapport de vitesse montant,
- une étape de déplacement (E4) du disque d'embrayage (310) vers une position d'engagement de manière à entrer dans une phase de glissement par relâchement progressif de la pédale d'embrayage, et
- une étape de contrôle (E5) du couple du volant d'inertie (120) préalablement à l'engagement du volant d'inertie (120) avec le disque d'embrayage (310), **caractérisé en ce que**:
- l'étape de contrôle (E5) du couple du volant d'inertie (120) comprend une étape de mise en œuvre d'une fonction de limitation de couple (F_lim) consistant à réduire un couple du volant d'inertie (120) par rapport à un couple du volant d'inertie (120) demandé par le conducteur,
**caractérisé en ce que** dans le cas où un enfoncement d'une pédale d'accélération est supérieur à un seuil, la fonction de limitation de couple (F_lim) est inhibée.

2. Procédé selon la revendication 1, **caractérisé en ce que** le couple du volant d'inertie (120) demandé par le conducteur est coordonné avec des fonctions d'aide à la conduite.

3. Procédé selon la revendication 1 ou 2, **caractérisé en ce que** des conditions d'activation de la fonction de limitation de couple (F_lim) sont choisies parmi les suivantes :
i- un écart entre un régime réel (Wmth_r) du volant d'inertie (120) et un régime cible (Wmth_c) du volant d'inertie (120) correspondant au rapport de vitesse cible est inférieur à un seuil,
ii- des conditions d'ouverture du dispositif d'embrayage (30) sont remplies,
iii- le rapport de vitesse cible fait partie d'une cartographie permettant de choisir des rapports pour lesquels la fonction de limitation de couple (F_lim) est fonctionnelle,
iv- une vitesse du véhicule automobile est supérieure à un seuil prédéterminé et des autorisations d'activation sont fournies par des fonctions d'aide à la conduite et des fonctions de sûreté de fonctionnement et des fonctions de gestion du couple thermique,
v- un capteur de position de neutre d'un levier de vitesse indique que le levier de vitesse est au neutre,
vi- un rapport de vitesse en cours est nul,
vii- un enfoncement de la pédale d'embrayage est compris entre un premier seuil et un deuxième seuil,
viii- un gradient de relevé de pédale d'embrayage est supérieur à un seuil de gradient,
ix- un régime du moteur thermique (10) est situé dans une plage de régime prédéterminée.

4. Procédé selon la revendication 3, **caractérisé en ce que** des conditions d'activations supplémentaires suivantes sont également prises en compte :
- un niveau de couple transmissible par le dispositif d'embrayage (30) est compris entre un premier seuil de couple transmissible et un deuxième seuil de couple transmissible,
- une position du disque d'embrayage (310) est comprise entre un premier seuil de position et un deuxième seuil de position,
- une température du dispositif d'embrayage (310) est comprise entre un premier seuil de température et un deuxième seuil de température.

5. Procédé selon la revendication 3 ou 4, **caractérisé en ce que** les seuils dépendent d'au moins un paramètre choisi parmi : une température du dispositif d'embrayage (30), une vitesse du véhicule automobile, le rapport de vitesse cible, un état d'activation de fonctions d'aide à la conduite.

6. Procédé selon l'une quelconque des revendications 3 à 5, **caractérisé en ce que** la fonction de limitation de couple (F_lim) est désactivée lorsqu'au moins une condition de désactivation ci-dessous est remplie :
- la fonction de limitation de couple (F_lim) a été mise en œuvre pendant une durée prédéterminée,
- un instant où une génération de couple doit opérer est détecté.
- la condition d'activation iii est désactivée sur une hystérésis,
- la condition d'activation iv est désactivée sur une hystérésis,
- un couple du dispositif d'embrayage (30) est situé dans une plage de valeurs prédéterminée.

7. Procédé selon la revendication 6, **caractérisé en ce que** la durée prédéterminée est calibrable en fonction d'une vitesse du véhicule automobile et du rapport de vitesse cible.

## Patentansprüche

1. Verfahren zum Steuern eines Motors (10) eines Kraftfahrzeugs (1) mit Handschaltgetriebe (20), wobei der Motor (10) ein Schwungrad (120) aufweist, das über eine Kupplungsvorrichtung (30) mit einer Primärwelle (210) des Getriebes (20) verbunden ist, wobei die Kupplungsvorrichtung (30) eine Kupplungsscheibe (310) aufweist, wobei das Verfahren aufweist:
- einen Schritt des Verstellens (E1) der Kupplungsscheibe (310) in eine zurückgezogene Stellung relativ zum Schwungrad (120) durch Eindrücken eines Kupplungspedals,
- eine Stufe (E2) zum Ausrücken eines Anfangsgetriebes,
- einen Schritt (E3) zum Überschreiten eines Zielübersetzungsverhältnisses, das einem ansteigenden Übersetzungsverhältnis entspricht,
- ein Schritt (E4) zum Bewegen der Kupplungsscheibe (310) in eine Einrückposition, um durch allmähliches Lösen des Kupplungspedals in eine Schlupfphase einzutreten, und
- eine Prüfstufe (E5) des Drehmoments des Schwungrades (120) vor dem Eingriff des Schwungrades (120) mit der Kupplungsscheibe (310),
**dadurch gekennzeichnet, dass**
- der Prüfschritt (E5) des Schwungraddrehmoments (120) einen Schritt zur Implementierung einer Drehmomentbegrenzungsfunktion (F_lim) umfasst, die darin besteht, ein Drehmoment des Schwungrades (120) in Bezug auf ein vom Fahrer angefordertes Schwungraddrehmoment (120) zu reduzieren,
**dadurch gekennzeichnet, dass** bei einem Drücken eines Beschleunigungspedals oberhalb einer Schwelle die Drehmomentbegrenzungsfunktion (F_lim) unterdrückt wird.

2. Verfahren nach Anspruch 1, **dadurch gekennzeichnet, dass** das vom Fahrer angeforderte Drehmoment des Schwungrades (120) mit Fahrerunterstützungsfunktionen koordiniert wird.

3. Verfahren nach Anspruch 1 oder 2, **dadurch gekennzeichnet, dass** die Aktivierungsbedingungen der Drehmomentbegrenzungsfunktion (F_lim) aus den folgenden ausgewählt werden:
i- eine Abweichung zwischen einer tatsächlichen Drehzahl (Wmth_r) des Schwungrades (120) und einer dem Sollübersetzungsverhältnis entsprechenden Zieldrehzahl (Wmth_c) des Schwungrades (120) kleiner als ein Schwellenwert ist,
ii- die Bedingungen für das Öffnen der Kupplungsvorrichtung (30) erfüllt sind,
iii- das Zielgangverhältnis Teil einer Abbildung ist, die die Auswahl von Gängen ermöglicht, bei denen die Drehmomentbegrenzungsfunktion (F_lim) funktionsfähig ist,
iv- eine Fahrzeuggeschwindigkeit über einem vorgegebenen Schwellenwert liegt und Aktivierungsgenehmigungen durch Fahrerassistenzfunktionen, Betriebssicherheitsfunktionen und Funktionen zur Steuerung des thermischen Drehmoments erteilt werden,
v- ein Neutralpositionssensor eines Schalthebels anzeigt, dass der Schalthebel neutral ist,
vi- ein aktueller Gang ist Null,
vii- eine Betätigung des Kupplungspedals zwischen einer ersten und einer zweiten Schwelle erfolgt,
viii- ein Kupplungspedalverstellgradient größer als ein Gradientenschwellenwert ist,
ix- eine Drehzahl des Verbrennungsmotors (10) in einem vorgegebenen Drehzahlbereich liegt.

4. Verfahren nach Anspruch 3, **dadurch gekennzeichnet, dass** zusätzlich folgende Aktivierungsbedingungen berücksichtigt werden:
- ein von der Kupplungseinrichtung (30) übertragbarer Drehmomentpegel zwischen einer ersten übertragbaren Drehmomentschwelle und einer zweiten übertragbaren Drehmomentschwelle liegt,
- eine Position der Kupplungsscheibe (310) zwischen einer ersten und einer zweiten Positionsschwelle liegt,
- eine Temperatur der Kupplungsvorrichtung (310) zwischen einem ersten Temperaturschwellenwert und einem zweiten Temperaturschwellenwert liegt.

5. Verfahren nach Anspruch 3 oder 4, **dadurch gekennzeichnet, dass** die Schwellenwerte von mindestens einem Parameter abhängen, der ausgewählt ist aus: einer Temperatur der Kupplungsvorrichtung (30), einer Geschwindigkeit des Kraftfahrzeugs, dem Sollgeschwindigkeitsverhältnis, einem Aktivierungszustand von Fahrerunterstützungsfunktionen.

6. Verfahren nach einem der Ansprüche 3 bis 5, **dadurch gekennzeichnet, dass** die Drehmomentbegrenzungsfunktion (F_lim) deaktiviert wird, wenn mindestens eine der folgenden Deaktivierungsbedingungen erfüllt ist:
- die Drehmomentbegrenzungsfunktion (F_lim) über einen vorgegebenen Zeitraum implementiert wurde,
- ein Zeitpunkt, an dem eine Drehmomenterzeugung zu erfassen ist.
- die Aktivierungsbedingung III bei einer Hysterese deaktiviert ist,
- die Aktivierungsbedingung IV bei einer Hysterese deaktiviert ist,
- ein Drehmoment der Kupplungseinrichtung (30) in einem vorgegebenen Wertebereich liegt.

7. Verfahren nach Anspruch 6, **dadurch gekennzeichnet, dass** die vorbestimmte Zeitdauer in Abhängigkeit von einer Fahrzeuggeschwindigkeit und dem Sollgeschwindigkeitsverhältnis kalibrierbar ist.

## Claims

1. A method of controlling an engine (10) of a motor vehicle (1) having a manual transmission (20), the engine (10) comprising a flywheel (120) connected via a clutch device (30) to a primary shaft (210) of the transmission (20), the clutch device (30) comprising a clutch disk (310), the method comprising:
- a step of adjusting (E1) the clutch disk (310) to a retracted position relative to the flywheel (120) by pressing in a clutch pedal,
- a stage (E2) for disengaging an initial gearbox,
- a step (E3) for exceeding a target gear ratio corresponding to an increasing gear ratio,
- a step (E4) for moving the clutch disk (310) to an engaged position to enter a slip phase by gradually releasing the clutch pedal, and
- a test stage (E5) of the torque of the flywheel (120) before the engagement of the flywheel (120) with the clutch disk (310),
**characterized in that**
- the test step (E5) of the flywheel torque (120) comprises a step of implementing a torque limiting function (F_lim) consisting in reducing a torque of the flywheel (120) with respect to a flywheel torque (120) requested by the driver,
**characterized by** the, that in the case of a pressing of an acceleration pedal above a threshold of the torque limiting function (F_ lim) is suppressed.

2. Method according to Claim 1, **characterized in that** the torque of the flywheel (120) requested by the driver is coordinated with driver-assistance functions.

3. A method according to claim 1 or 2, **characterized in that** the activation conditions of the torque limiting function (F_lim) are selected from the following:
i- a deviation between an actual rotational speed (Wmth_r) of the flywheel (120) and a target rotational speed (Wmth_c) of the flywheel (120) corresponding to the desired transmission ratio is less than a threshold value,
ii- the conditions for opening the coupling device (30) are met,
iii- the target gear ratio is part of an illustration allowing selection of gears at which the torque limitation function (F_lim) is functional,
iv- a vehicle speed is above a specified threshold and activation approvals are granted by driver assistance functions, operational safety functions and thermal torque control functions,
v- a neutral position sensor of a shift lever indicates that the shift lever is neutral,
vi- a current gear is zero,
vii- the clutch pedal is actuated between a first and a second threshold,
viii - a clutch pedal adjustment gradient greater than a gradient threshold value,
ix- a rotational speed of the internal combustion engine (10) in a predetermined rotational speed range.

4. Method according to Claim 3, **characterized in that** the following activation conditions are additionally taken into account:
- a torque level that can be transmitted by the clutch device (30) is between a first transmittable torque threshold and a second transmittable torque threshold,
- a position of the clutch disk (310) is between a first and a second position threshold,
- a temperature of the coupling device (310) is between a first temperature threshold value and a second temperature threshold value.

5. Method according to Claim 3 or 4, **characterized in that** the threshold values depend on at least one parameter selected from: a temperature of the coupling device (30), a speed of the motor vehicle, the desired speed ratio, an activation state of driver assistance functions.

6. Method according to one of Claims 3 to 5, **characterized in that** the torque limiting function (F_lim) is deactivated when at least one of the following deactivation conditions is met:
- the torque limitation function (F_lim) has been implemented for a specified period of time,
- a point in time at which torque generation is to be detected.
- activation condition III is disabled in case of hysteresis,
- activation condition IV is disabled in case of hysteresis,
- a torque of the coupling device (30) is within a predetermined value range.

7. Method according to Claim 6, **characterized in that** the predetermined period of time can be calibrated as a function of a vehicle speed and the desired speed ratio.
